## Europäisches Patentamt
## European Patent Office
## Office européen des brevets

(11) Publication number: **0 030 074**
**B1**

(12) **EUROPEAN PATENT SPECIFICATION**

(45) Date of publication of patent specification: **04.09.85**

(51) Int. Cl.⁴: **B 65 D 19/12**

(21) Application number: **80303609.4**

(22) Date of filing: **14.10.80**

(54) Folding freight carrier.

(30) Priority: **16.10.79 GB 7935920**

(43) Date of publication of application:
**10.06.81 Bulletin 81/23**

(45) Publication of the grant of the patent:
**04.09.85 Bulletin 85/36**

(84) Designated Contracting States:
**AT CH DE FR LI NL SE**

(56) References cited:
**DE-A-2 450 906**
**DE-B-1 159 852**
**GB-A-1 217 334**
**GB-A-1 252 000**
**GB-A-1 262 202**
**GB-A-1 432 542**

(73) Proprietor: **HENRED FRUEHAUF TRAILERS (PTY) LIMITED**
**Private Bag 5**
**Bergvlei Transvaal 2012 (ZA)**

(72) Inventor: **Howe, Peter**
**22 Clairville Gloucester Road**
**Southport Merseyside (GB)**

(74) Representative: **Lister, David Anthony**
**APPLEYARD, LEES & CO. 15, Clare Road**
**Halifax West Yorkshire, HX1 2HY (GB)**

Courier Press, Leamington Spa, England.

## Description

The invention relates to folding freight carriers or containers of the type usually known as cargo flats and more particularly, but not exclusively, to the type of freight carrier described in British Patent Nos: 1,217,334; 1,252,000; 1,266,689; 1,432,542; 1,603,801; and 1,603,802.

This type of freight carrier comprises a substantially flat rectangular base structure, forming a continuous load-bearing freight carrying platform having a post member at each corner thereof which is pivotally mounted on the base structure. Each post member is capable of being moved between a folded position in which the post rests upon and lies parallel to and adjacent to the base structure, and an erected position in which the post extends upwardly from the base structure.

When the posts are in their erected position one or more cross members can be connected therebetween to form side and end members of the carrier and in certain ones of this type of carrier, the two posts at each end of the base structure can be permanently connected together by one or more cross members to form a unitary end structure. With the posts erected and the sides and ends thereof in position, the carrier forms an enclosure or container for general freight or cargo which is loaded on to the upper surface of the base structure.

In this type of folding freight carrier, it is necessary in order to meet the requirements for carrying general freight or cargo to provide a substantially plane, continuous upper surface forming a load bearing freight carrying platform to enable a multiplicity of types of cargo to be transported. Clearly any freight carrier having open spaces in the freight carrying platform would not meet this general cargo carrying requirement and would not constitute a freight carrier of the type with which this invention is concerned. In addition, when the posts are in their erected position, it is necessary for the posts to be capable of supporting a plurality of loaded freight carriers stacked thereon.

German Patent Offenlegungsschrift No: 24 50 906 is only concerned with a pallet having support stands which fold into and are stored away in an open central area of the pallet. The pallet is designed purely for the transportation of a single type of freight, namely, plates which by their nature only require support at spaced-apart positions on the pallets load carrying surface and thus this pallet does not constitute a freight carrier of the type with which this invention is concerned. Furthermore, the pallets support stands are only concerned with holding erect plate like freight which is to be transported on edge and therefore this specialized product would not offer a solution to or be taken into account by a person who is seeking to provide the advantages obtained in the applicants freight carrier as hereinafter described.

In the type of freight carrier with which this invention is concerned, it is usual to provide an arrangement for locking the corner posts in their erect position and two alternative types of locking arrangements are described in British Patent No: 1,217,344 and in British Patent Nos: 1,603,801 and 1,603,802.

When the carrier is empty and the corner posts are in the folded position, one or more carriers can be stacked one upon another to save space when empty carriers are being transported. It is usual to provide an interlocking arrangement on each freight carrier for connecting the folded carrier to a similar folded carrier which is stacked thereon. Such interlocking arrangements are described in British Patent Nos: 1,252,000; 1,603,801; and 1,603,802.

Furthermore, when forming such a stack of folded freight carriers, it is necessary for the overall height of the stack to remain within the height of an erected carrier so as to conform to and fall within the normal space allocated in rail or road vehicles or ships which are used for transporting such freight carriers.

In the known folding freight carriers of this type referred to above, the corner posts or unitary end structures rest in their folded position upon the upper surface of the base structure. Consequently, when a similar folded freight carrier is placed thereon to form a stack, this results in the disadvantage that the space occupied by the corner posts or unitary end structures can reduce the number of folded freight carriers which it is possible to form into a stack whose overall height remains within the height of an erected carrier.

In addition, there is a requirement when transporting certain types of freight to provide a plane load-carrying platform or bolster. Clearly, in the known types of folding freight carriers referred to above, the corner posts or unitary end structures which in their folded positions rest upon the freight-carrying platform make it impossible to utilise a folded freight carrier as a bolster and manufacturers freight carriers have thus supplied for a number of years two separate products, namely a folding freight carrier and a bolster, to meet the requirements of the transportation industry.

This invention is concerned with not only providing a folding freight carrier in which the above disadvantages and difficulties are alleviated but also in realising that by producing a single design of freight carrier of the type which is the subject of this invention, such a carrier can be used as a folding freight carrier or as a bolster and have the facilities of both of these earlier designs of carrier, thus solving an unrealised problem.

According to this invention, a folding freight carrier comprises a base structure having a substantially plane, continuous upper surface forming a load bearing freight carrying platform and post members at or closely adjacent to each corner of the base structure which are pivotally mounted thereon so as to be capable of being selectively pivoted from an erect upwardly extending upright position in which a plurality of freight carriers can be stacked one upon another to a folded position in which each post member lies parallel to or substantially parallel to the base structure, characterised in that each post member in the folded position does not project above the upper surface of the base structure and forms together with the existing upper surface a part of the continuous plane load bearing freight carrying platform extending across substantially the full width and length of the freight carrier.

Preferably, the folding freight carrier is further characterised in that the sides of the base structure adjacent to each corner have a recess formed therein in each of which the associated post member is received when in the folded position.

Preferably, also, the folding freight carrier is further characterised in that the two post members at each end of the base structure are connected together by one or more cross members to form a unitary end structure and the upper surface of the base structure is provided with one or more corresponding recesses therein in which the or each associated cross member is located when the end structure is in the folded position so that the or each member does not project above said upper surface of the base structure. The folding freight carrier is, preferably, further characterised in that the lower end of each post member is provided with an attachment or engaging means whereby, when the posts are in their folded position, said attachment or engaging means is capable of being connected to a lifting apparatus to effect lifting and transportation of the folded carrier in either an unloaded or loaded condition.

Preferably, the folding freight carrier is further characterised in that the pivotal axis of each post member is disposed adjacent to the lower end thereof but is spaced-apart from the position of the attachment or engaging means in a direction towards the free upper end of the post member and/or is off-set from the longitudinal axis of the erected post member in a direction inwardly along the longitudinal axis of the base structure, so that when the carrier is lifted with post members in their folded position by utilisation of the attachment or engaging means on each post member, the lifting force exerted thereon urges the post members towards their folded position.

Preferably, also, the folding freight carrier is further characterised in that the base structure has supports formed or mounted thereon which are adapted to engage the post members at points spaced-apart from the pivotal axis thereof so as to support the post members in their folded position and enable the post members or the unitary end structure of which the post members form a part to have a load bearing capability.

A preferred embodiment of this invention will now be described, by way of example only, with reference to the accompanying drawings of which:—

Figure 1 is a side elevation of a folding freight carrier in an erected position;

Figure 2 is a side elevation of the carrier in a folded position;

Figure 3 is a partly sectioned plan view of the carrier shown in Figure 2 of the drawings;

Figure 4 is a section on the line A—A in Figure 3 of the drawings; and

Figure 5 is an end elevation of the carrier shown in Figure 1 of the drawings.

Referring now to the drawings, a folded freight carrier or container of the type usually known as a folding cargo flat comprises a substantially flat rectangular base structure indicated generally at 10. The base structure 10 is formed of two parallel spaced-apart longitudinally extending beams 12, one beam 12 being disposed adjacent to each side of the base structure. Two spaced-apart parallel longitudinally extending intermediate beams 14 are disposed between the two beams 12 and a series of parallel spaced-apart transversely extending beams 16 are welded to the beams 12 and the intermediate beams 14. The upper surface of the base structure 10 is covered with decking formed of, for example, hardwood planking to form a load bearing freight carrying platform 18.

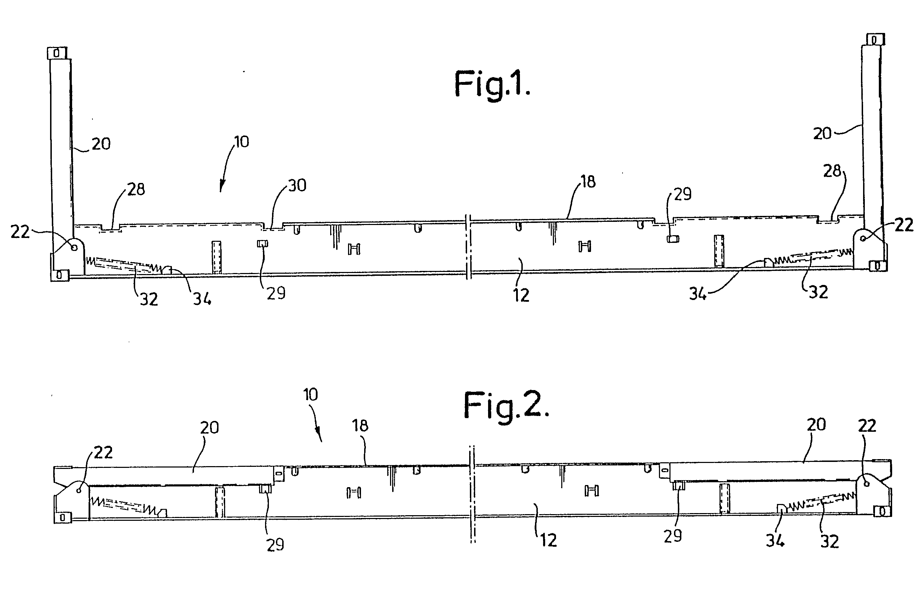

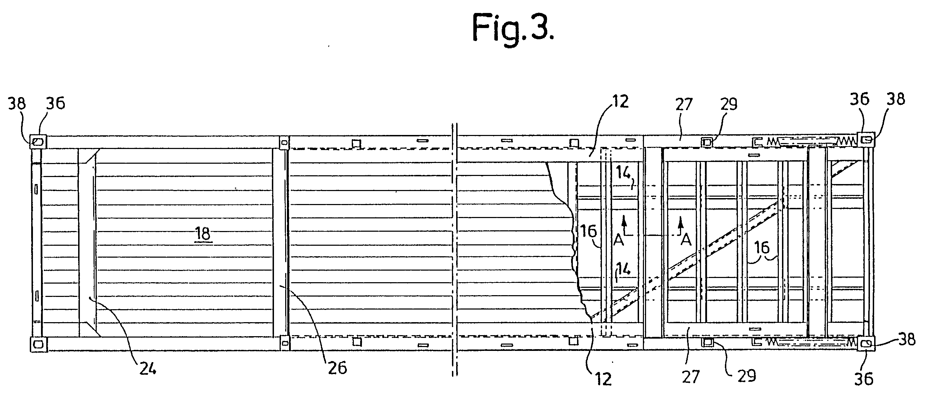

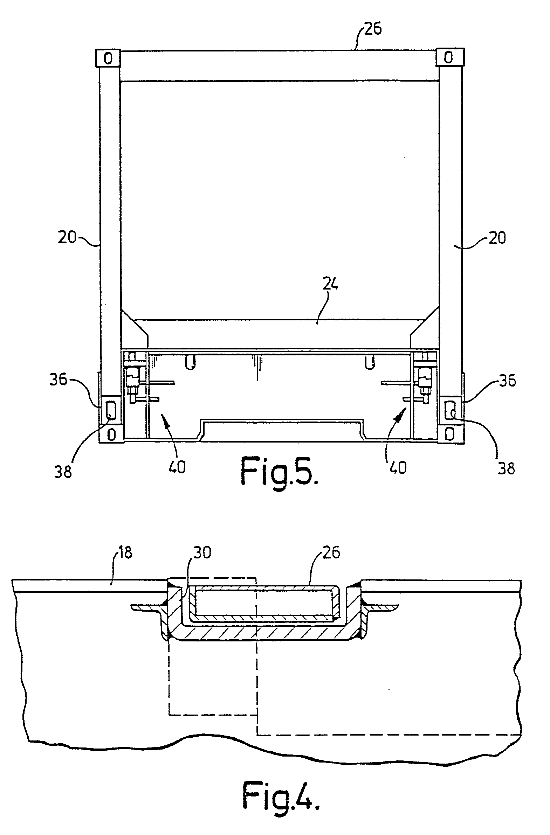

A post member 20 is pivotally mounted on the base structure 10 at each corner therof by means of a pivot pin 22 and each post member 20 is capable of being moved from an erect upright position as shown in Figure 1 of the drawings to a folded position as shown in Figure 2 of the drawings. The two post members 20 at each end of the carrier are permanently connected together at a point between their ends by a cross member 24 and at a point adjacent to their free ends by a head rail 26. The two post members 20 at each end of the carrier together with the interconnecting cross member 24 and the interconnecting head rail 26 thus form a unitary end structure which is capable of pivotal movement from the erect position shown in Figure 1 and Figure 5 of the drawings to the collapsed position shown in Figure 2 and Figure 3 of the drawings.

Each side of the base structure 10 is provided adjacent to the ends thereof with a longitudinally extending recess 27 for receiving the associated post member 20 when the unitary end structure of which the post members 20 form a part is moved to the folded position. Supports 29 are mounted on the base structure 10 adjacent to each recess 27 and are arranged to engage the post members 20 at a point spaced-apart from the pivotal axes thereof so as to support the post members 20 in their folded position and enable the folded post members 20 to have a load bearing capability. The freight carrying platform 18 of the base structure 10 is also provided adjacent to each end thereof with transversely extending recesses 28 and 30 which are adapted to respectively receive therein the cross member 24 and the head rail 26 when the associated unitary end structure, of which they form a part, is moved to the folded position. The disposition of one of the head rails 26 within an associated one of the recesses 30 on the load carrying platform 18 is shown in cross section in Figure 4 of the drawings.

The pivot pins 22 which pivotally connect the post members 20 to the base structure 10 are disposed sufficiently below the level of the platform 18 of the base structure so that when the unitary end structures are moved to the folded position, the upper surfaces of the post members 20, the cross members 24 and the head rails 26 which together constitute the unitary end structures lie substantially flush with and do not project above the surface of the platform 18. It will therefore be appreciated that when the carrier is in the folded position, the unitary end structures formed by the post members 20, the cross members 24 and the head rails 26 form a continuation of the load bearing freight carrying platform 18.

The pivot pins 22 are also spaced-apart from the lower end of the associated post members 20 and a helical coil tension spring 32 is connected between the lower end of each post member 20 and a lug 34 on the base structure 10 of the carrier. Each spring 32 is arranged to be extended in length as the associated post members 20, cross members 24 and head rails 26 are pivoted downwardly from the erect to the folded position. The springs 32 exert a force on the unitary end structure which urges said unitary end structure towards the erect position thus counterbalancing at least part of the weight thereof. The lower end of each post member 20 is provided with a plate 36 having an aperture 38 formed therein. The plate 36 is disposed on the associated post member 20 so that when said post member is in the folded position, the plate 36 is positioned at each corner of the carrier and the aperture 38 therein provides an attachment or engaging means for connecting the carrier to a lifting apparatus such as a spreader frame of a crane which can be utilised to effect lifting and transportation of the folded carrier in either an unloaded or loaded condition.

A locking apparatus indicated generally at 40 is provided at each corner of the base structure 10. This locking apparatus is of the type described in British Patent Nos: 1,603,801 and 1,603,802 and is arranged to perform the dual function of locking the associated post members 20 and thus the unitary end structures of which they form a part, in their erect upright position and also when the unitary end structures are in their folded position, the locking apparatus 40 is arranged to interlock the folded carrier with a similar folded freight carrier which is disposed thereon.

It will be appreciated that a stack of folded freight carriers can thus be formed and it will also be appreciated that the disposition of the post members 20, the cross members 24 and the head rails 26 in their folded position so that the unitary end structure which they constitute lies flush with and does not extend above the surface of the freight carrying platform 18 enables a larger number of folded freight carriers to be formed into a stack of given height than would be possible if the unitary end structures in their folded position merely rested upon the freight carrying platform 18.

In a modification, the cross member 24 and the head rail 26 are arranged to be removable from the associated post members 20 and the recesses 28 and 30 in the freight carrying platform 18 of the base structure 10 are not required.

In addition, the cross members or head rails which are releasably connectable to the post members 20 can be dispensed with entirely and the base structure merely provided with free standing pivotable post members 20 at each corner thereof. This form of construction allows unobstructed access when loading the freight carrying platform 18 from not only the sides but also the ends thereof.

It will also be appreciated that the folding carrier which is the subject of this invention can perform the dual functions of not only providing a container within which freight can be carried but can also be utilised as a pure load carrying platform or bolster when the post members 20 are disposed in their folded position so that freight to be transported is merely placed upon the platform 18 of the base structure 10 of the carrier.

**Claims**

1. A folding freight carrier comprising a base structure (10) having a substantially plane, continuous upper surface forming a load bearing freight carrying platform (18) and post members (20) at or closely adjacent to each corner of the base structure (10) which are pivotally mounted thereon so as to be capable of being selectively pivoted from an erect upwardly extending upright position in which a plurality of freight carriers can be stacked one upon another to a folded position in which each post member (20) lies parallel to or substantially parallel to the base structure (10), characterised in that each post member (20) in the folded position does not project above the upper surface of the base structure (10) and forms together with the existing upper surface a part of the continuous plane load bearing freight carrying platform (18) extending across substantially the full width and length of the freight carrier.

2. A folding freight carrier according to Claim 1, further characterised in that the sides of the base structure (10) adjacent to each corner have a recess (27) formed therein in each of which the associated post member (20) is received when in the folded position.

3. A folding carrier according to Claim 1 or Claim 2, further characterised in that the two post members (20) at each end of the base structure (10) are connected together by one or more cross members (24, 26) to form a unitary end structure and the upper surface of the base structure (10) is provided with one or more corresponding recesses (30) therein in which the or each associated cross member (24, 26) is located when the end structure is in the folded position so that the or each cross member (24, 26) does not project above said upper surface of the base structure (10).

4. A folding freight carrier according to any one of the preceding claims, further characterised in that the lower end of each post member (20) is provided with an attachment or engaging means (36, 38) whereby, when the posts (20) are in their folded position, said attachment or engaging means (36, 38) is capable of being connected to a lifting apparatus to effect lifting and transportation of the folded carrier in either an unloaded or loaded condition.

5. A folding freight carrier according to Claim 4, further characterised in that the pivotal axis of each post member (20) is disposed adjacent to the lower end thereof but is spaced-apart from the position of the attachment or engaging means (36, 38) in a direction towards the free upper end of the post member (20) and/or is off-set from the longitudinal axis of the erected post member (20) in a direction inwardly along the longitudinal axis of the base structure (10), so that when the carrier is lifted with the post members (20) in their folded position by utilisation of the attachment or engaging means (36, 38) on each post member (20), the lifting force exerted thereon urges the post members (20) towards their folded position.

6. A folding freight carrier according to any one of the preceding claims, further characterised in that the base structure (10) has supports (29) formed or mounted thereon which are adapted to engage the post members (20) at points spaced-apart from the pivotal axis thereof so as to support the post members (20) in their folded position and enable the post members (20) or the unitary end structures of which the post members (20) form a part to have a load bearing capability.

**Patentansprüche**

1. Faltbarer Frachtgutträger, der einen Grundaufbau (10) mit im wesentlichen ebener, durchgehender, oberer Oberfläche, die eine lastaufnehmende, frachttragende Plattform (18) bildet, und Pfostenelemente (20) an oder nahe benachbart zu jeder Ecke des Grundaufbaus (10) aufweist, die schwenkbar daran befestigt sind, so daß sie wahlweise aus einer aufgerichteten, nach oben erstreckten, aufrechten Stellung, in der mehrere Frachtgutträger aufeinander gestapelt werden können, in eine zusammengefaltete Stellung geschwenkt werden können, in der jedes Pfostenelement (20) parallel oder im wesentlichen parallel zum Grundaufbau (10) liegt, dadurch gekennzeichnet, daß jedes Pfostenelement (20) in seiner zusammengefalteten Stellung nicht über die obere Oberfläche des Grundaufbaus (10) vorsteht und gemeinsam mit der vorhandenen oberen Oberfläche einen Teil der durchgehenden, ebenen, lastaufnehmenden, frachttragenden Plattform (18) bildet, die sich über im wesentlichen die gesamte Breite und Länge des Frachtgutträgers erstreckt.

2. Faltbarer Frachtgutträger nach Anspruch 1, dadurch gekennzeichnet, daß die Seiten des Grundaufbaus (10) benachbart zu jeder Ecke einen darin gebildeten Einschnitt (27) besitzen, in die jeweils die zugeordneten Pfostenelemente (20) in ihrer zusammengefalteten Stellung aufgenommen werden.

3. Faltbarer Frachtgutträger nach Anspruch 1 oder 2, dadurch gekennzeichnet, daß die zwei Pfostenelemente (20) an jedem Ende des Grundaufbaus (10) miteinander mittels einer oder mehrerer Traversen (24, 26) verbunden sind, um einen einheitlichen Stirnaufbau zu bilden, und daß die obere Oberfläche des Grundaufbaus (10) mit einem oder mehreren entsprechenden Einschnitten (30) versehen ist, in die der oder die zugeordneten Traversen (24, 26) angeordnet sind, wenn der Stirnaufbau in seiner zusammengefalteten Stellung ist, so daß die bzw. jede Traverse (24, 26) nicht über die obere Oberfläche des Grundaufbaus (10) hinaussteht.

4. Faltbarer Frachtgutträger nach einem der vorstehenden Ansprüche, dadurch gekennzeichnet, daß das untere Ende eines jeden Pfostenelements (20) mit einer Verknüpfungs- oder Befestigungseinrichtung (36, 38) versehen ist, wodurch, wenn die Pfostenelemente (20) in ihrer zusammengefalteten Stellung sind, die Verknüpfungs- bzw. Befestigungseinrichtung (36, 38) in der Lage ist, mit einer Anhebevorrichtung verbunden zu werden, um ein Anheben und Transportieren des zusammengefalteten Frachtgutträgers in sowohl unbeladenem als auch beladenem Zustand zu bewirken.

5. Flatbarer Frachtgutträger nach Anspruch 4, dadurch gekennzeichnet, daß die Schwenkachse eines jeden Pfostenelements (20) benachbart zum unteren Ende angeordnet, aber von der Stellung der Verknüpfungs- bzw. Befestigungseinrichtung (36, 38) in Richtung zum freien oberen Ende des Pfostenelements (20) beabstandet ist und/oder von der Längsachse des aufgerichteten Pfostenelements (20) in Richtung einwärts längs der Längsachse des Grundaufbaus (10) abgesetzt ist, so daß, wenn der Frachtgutträger mit Pfostenelementen (20) in zusammengefalteter Stellung angehoben wird, mittels Verwendung der Verknüpfungs- bzw. Befestigungseinrichtung (36, 38) an jedem Pfostenelement (20) die auf dieses ausgeübte Anhebekraft die Pfostenelemente (20) in ihre zusammengefaltete Stellung drückt.

6. Faltbarer Frachtgutträger nach einem der vorstehenden Ansprüche, dadurch gekennzeichnet, daß der Grundaufbau (10) Träger (29) aufweist, die an ihm ausgebildet oder befestigt sind und die die Pfostenelemente (20) an Punkten beabstandet von ihrer Schwenkachse berühren können, so daß sie die Pfostenelemente (20) in ihrer zusammengefalteten Stellung stützen und die Pfostenelemente (20) bzw. die einheitlichen Stirnaufbauten, von denen die Pfostenelemente (20) einen Teil bilden, mit Lastaufnahmeeigenschaften zu versehen.

**Revendications**

1. Porte-frêt repliable comprenant une structure de base (10) qui présente une surface supérieure continue et sensiblement plane constituant une plate-forme porteuse de frêt (18) supportant le charge et des montants (20) situés au niveau ou à proximité immédiate de chacun des coins de la structure de base (10), ces montants étant articulés sur cette dernière de manière à pouvoir être sélectivement déplacés par pivotement d'une position redressée verticale derigée vers le haut, dans laquelle plusieurs porte-frêt peuvent être empilés les uns sur les autres, à une position rabattue dans laquelle chaque montant (20) s'étend parallèlement ou sensiblement parallèlement à la structure de base (10), caractérisé en ce que chaque montant (20), lorsqu'il est en position rabattue, ne dépasse pas de la surface supérieure de la structure de base (10) et forme, conjointement avec la surface supérieure existante, une partie de la plate-forme porteuse de frêt plane et continue (18) supportant la charge, laquelle s'étend sur sensiblement toute la largeur et toute la longueur du porte-frêt.

2. Porte-frêt repliable selon la revendication 1, caractérisé en outre en ce que, dans les côtes de la structure de base (10), qui sont adjacents à chacun des coins, sont ménagés des renfoncements (27) dans chacun desquels le montant associé (20) vient se loger quand il est en position rabattue.

3. Porte-frêt repliable selon le revendication 1 ou la revendication 2, caractérisé en outre en ce que les deux montants (20), situés à chaque extrémité de la structure de base (10), sont reliés l'un à l'autre par une ou plusieurs traverses (24, 26) pour former une structure d'extrémité unitaire et la surface supérieure de la structure de base (10) est pourvue d'un ou de plusieurs renfoncements (30) de forme correspondante, dans lesquels la ou chaque traverse associée (24, 26) vient se placer quand la structure d'extrémité est en position rabattue, de sorte que la ou chaque traverse (24, 26) ne dépasse pas de ladite surface supérieure de la structure de base (10).

4. Porte-frêt repliable selon l'une quelconque des revendications précédentes, caractérisé en outre en ce que l'extrémité inférieure de chaque montant (20) est pourvue d'un organe de fixation ou d'emboîtement (36, 38) pour que, lorsque les montants (20) sont dans leur position rabattue, lesdits organes de fixation ou d'emboîtement (36, 38) soient aptes à être réunis à un appareil de levage pour assurer le levage et le transport du porte-frêt replié, à l'état chargé ou déchargé.

5. Porte-frêt repliable selon la revendication 4, caractérisé en outre en ce que l'axe de pivotement de chaque montant (20) est situé à poximité de l'extrémité inférieure de ce dernier, en se trouvant toutefois à une certaine distance de l'emplacement de l'organe de fixation ou d'emboîtement (36, 38), en direction de l'extrémité supérieure libre du montant (20), et/ou en étant décalé par rapport à l'axe longitudinal du montant (20) en position redressée, vers l'intérieur et suivant la direction de l'axe longitudinal de la structure de base (10) si bien que, lorsque le porte-frêt est soulevé, avec les montants (20) en position rabattue, à l'aide des organes de fixation ou d'emboîtement (36, 38) de chaque montant (20), la force de levage qui s'exerce sur lui, repousse les montants (20) dans leur position rabattue.

6. Porte-frêt repliable selon l'une quelconque des revendications précédentes, caractérisé en outre en ce que, sur la structure de base (10), sont formés ou montés des éléments d'appui (29) qui sont susceptibles de venir en contact avec les montants (20) en des points distants de l'axe de pivotement de ces derniers, de façon à supporter les montants (20) dans leur position rabattue et à permettre aux·montants (20) ou aux structures d'extrémité unitaires dont font partie les montants (20), d'être dotés d'une capacité de support de charge.

Fig.1.

Fig.2.

0 030 074

0 030 074

Fig.3.

Fig.5.

Fig.4.